# EUROPEAN PATENT SPECIFICATION

(11) **EP 2 879 001 B1**
(45) Date of publication and mention of the grant of the patent: **23.05.2018**
(21) Application number: 13194600.6
(22) Date of filing: 27.11.2013
(51) Int. Cl.: G03B 42/04, G03B 42/08, G01T 1/20

(54) **Apparatus and method for reading out storage phosphor plates**
Vorrichtung und Verfahren zum Auslesen von Phosphorspeicherplatten
Appareil et procédé de lecture de plaques de phosphore de stockage

(43) Date of publication of application: 03.06.2015
(73) Proprietor: Agfa HealthCare N.V., 2640 Mortsel (BE)
(72) Inventor: Hammer, Heribert, 81371 München (DE)

(56) References cited:
- EP-A1- 1 640 800
- US-A- 5 308 994
- US-A- 5 399 878

## Description

The present invention relates to an apparatus and a method for reading out x-ray information stored in a storage phosphor plate according to the independent claims.

One possibility for recording X-ray images is to store X-ray radiation passing through an object, for example a patient, as a latent image in a so-called storage phosphor layer. In order to read out the latent image the storage phosphor layer is irradiated with stimulation light and thereby stimulated to emit emission light. The emission light, the intensity of which corresponds to the image stored in the storage phosphor layer, is detected by an optical detector and converted into electrical signals. Furthermore, the electrical signals are processed as required and finally made available for analysis, in particular for medical and/or diagnostic purposes, by being displayed on an appropriate display device, such as e.g. a monitor or printer.

EP 2 573 618 A1 shows an according read-out apparatus comprising an input device for receiving a cassette accommodating a storage phosphor plate. When the cassette is inserted into the input device, the cassette is fixed in the input device and/or opened by means of mechanically driven elements.

US 5 308 994 A shows a cassette setting device, wherein each of the cassettes having different sizes is set at a predetermined position in a cassette-utilizing apparatus. The positions of two side ends of the cassette are adjusted by a pair of guide members and light is shielded from the cassette-utilizing apparatus by a movable light shielding member.

US 5 399 879 A shows an apparatus for reading a cassette of light-sensitive material, wherein the cassette can have varying widths. The avoidance of light-leakage through a slot through which cassettes are fed is achieved by hingedly mounted shutters, dimensioned with widths to fill the portion of the total width of the slot that is not occupied when a cassette of a width smaller than the total width of the slot is used.

It is an object of the present invention to provide an apparatus and an according method allowing for reading out storage phosphor plates accommodated in cassettes of at least two different formats.

The object is achieved by the method and the system according to the independent claims.

An apparatus for reading out x-ray information stored in a storage phosphor plate according to the invention comprises an input device having a slot through which a cassette can be inserted into the input device, the cassette being designed for accommodating a storage phosphor plate, and a read-out device for irradiating the storage phosphor plate with stimulation light and detecting emission light stimulated in the phosphor plate. The input device is designed for receiving cassettes having different cassette widths, wherein, according to a first aspect of the invention, the input device comprises one or more first elements designed for aligning and/or fixing cassettes having different cassette widths in the input device. According to a second aspect of the invention, the input device comprises one or more second elements designed for shutting the slot of the input device in order to prevent ambient light from passing through the slot when cassettes having different cassette widths are inserted into the input device.

A method for reading out x-ray information stored in a storage phosphor plate comprises the steps of inserting a cassette into an input device through a slot of the input device, the cassette being designed for accommodating a storage phosphor plate, and reading out the storage phosphor plate by irradiating the storage phosphor plate with stimulation light and detecting emission light stimulated in the phosphor plate. According to a preferred aspect, the method further comprises the steps of aligning and/or fixing cassettes, which have different cassette widths, in the input device by means of one or more first elements and/or shutting the slot of the input device by means of one or more second elements in order to prevent ambient light from passing through the slot when cassettes having different cassette widths are inserted into the input device.

Preferably, the term "cassette width" relates to the dimension of a cassette along a direction which is in essential parallel to the extension of an opening of the cassette through which the storage phosphor plate can be removed from the cassette. Additionally or alternatively, the term "cassette width" may relate to the dimension of a cassette along a direction which is in essential perpendicular to the direction in which the cassette is inserted into the input unit. Additionally or alternatively, the term "cassette width" may relate to the dimension of a cassette along a direction which is in essential parallel to the extension of the slot of the input device.

The invention is based on the approach to provide an input device into which cassettes having different cassette widths can be inserted. First elements for aligning and/or fixing a cassette in the input unit and/or second elements for shutting a section of the slot, which is not "covered" or "occupied" with the inserted cassette of a given cassette width, are arranged such that for each cassette width of the cassettes, which can be inserted into the input device, specific or corresponding first and/or second elements are provided. For example, for aligning and/or fixing a cassette having a first cassette width first and/or second elements having a first position and/or first design are provided, whereas for aligning and/or fixing a cassette having a second cassette width, which is e.g. larger than the first cassette width, first and/or second elements having a second position and/or second design are provided. Same applies accordingly for first and/or second elements provided for cassettes having a third, fourth, fifth etc. cassette width. According to a particularly preferred aspect of the invention, the first and/or second elements comprise mechanical elements, which are driven by means of a pure mechanical drive, i.e. driven, e.g., without electromechanical means like motors.

In summary, the invention allows for reading out storage phosphor plates accommodated in cassettes of at least two different formats.

The first elements comprise at least one aligning element for each of the at least two different cassette widths, wherein each of the at least one aligning elements is designed for aligning and/or fixing a cassette of a given cassette width in the input device. For example, each of the aligning elements is designed for being pressed against a side face of the cassette, whereby the cassette is advanced by means of the aligning element along a direction parallel to the extension of the slot and/or pressed against an end stop provided at the opposite side face of the cassette.

The first elements further comprise at least one end stop, in particular a side end stop, and each of the at least one aligning elements being positioned such that when a cassette of a first cassette width is inserted, the cassette is pressed against the end stop by means of a first aligning element having a first position, and when a cassette of a second cassette width is inserted, the cassette is pressed against the end stop by means of a second aligning element having a second position, which is different from the first position. In particular, the distance between the first and the second position of the first and second aligning element approximately corresponds to the difference between the first and the second cassette width.

It is preferred that the first and second aligning elements are provided at different positions along a first direction running parallel to the extension of the slot of the input device and/or parallel to the extension of the opening of a cassette inserted into the slot.

The first and second aligning elements are mounted on a first mounting element, e.g. a rod-like element. Preferably, the first and/or second aligning elements are pivotably mounted on the first mounting element.

The apparatus further comprises a first guiding element arranged and/or formed for interacting with the first mounting element, whereby the first mounting element can be shifted parallel to the first direction. Preferably, the first guiding element is, preferably rigidly, mounted on a base of the input device.

The apparatus further comprises a carrier designed for being displaced, preferably relative to the base of the input device, in a second direction, which is perpendicular to the first direction, by means of a cassette being inserted into the input device. The first mounting element is provided, preferably mounted, on the carrier such that when the carrier is displaced in the second direction the first mounting element moves relative to the first guiding element and is therefore interacting with the latter. Preferably, the first guiding element is wedge-shaped such that when the first mounting element, in particular a mounting rod, is moved in the second direction relative to the wedge-shaped guiding element, the former is shifted or advanced parallel to the first direction.

The second elements comprise at least one cover element for each of the at least two different cassette widths, wherein each of the at least one cover element is designed for shutting the slot of the input device when a cassette of a given cassette width is inserted in the input device.

Each of the at least one cover elements being positioned such that when a cassette of a first cassette width is inserted, the slot is shut by means of a first cover element having a first position and a second cover element having a second position, which is different from the first position, and when a cassette of a second cassette width is inserted, the slot is shut by means of the second cover element.

According to a preferred embodiment, the first and second cover elements are provided at different positions along a first direction parallel to the extension of the slot of the input device and/or to the extension of the opening of a cassette inserted into the slot.

The first and second cover elements are mounted on a second mounting element. Preferably, the first and/or second cover elements being pivotably mounted on the second mounting element. For example, the second mounting element may be a rod-like mounting element.

A carrier is provided which is designed for being displaced in a second direction, which is perpendicular to the first direction, by means of a cassette being inserted into the input device.

The apparatus further comprises a second guiding element arranged and/or formed for interacting with the second mounting element, such that the second mounting element is shifted parallel to the first direction, whereby the first and/or second cover element is/are pressed against the inserted cassette. In particular, the second guiding element is, in particular rigidly, mounted on the carrier and/or rigidly coupled with the carrier.

The second mounting element is provided on the carrier such that when the carrier is displaced in the second direction the second mounting element is interacting with the second guiding element so that the second mounting element is shifted or advanced parallel to the first direction, whereby the first and/or second cover element is/are moved towards and/or pressed against the inserted cassette.

Further advantages, aspects and examples of the present invention will be apparent from the description of following figures:
- Fig. 1: shows an example of a read-out device for reading out a storage phosphor plate;
- Fig. 2: shows a cross section of an example of an apparatus for reading out storage phosphor plates;
- Fig. 3: shows a perspective view of an example of an input device;
- Fig. 4: shows a perspective view of the input device in a first state together with an inserted cassette of a first format;
- Fig. 5: shows a perspective view of the input device in a second state together with the inserted cassette of the first format;
- Fig. 6: shows a perspective view of the input device in a first state together with an inserted cassette of a second format; and
- Fig. 7: shows a perspective view of the input device in a second state together with the inserted cassette of the second format.

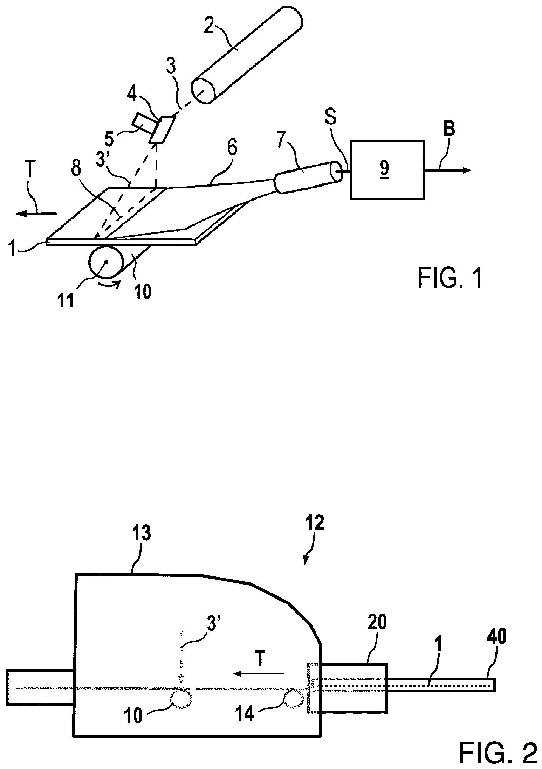

Figure 1 shows a read-out device for reading out a storage phosphor plate 1. By means of a laser 2 a stimulation light beam 3 is generated, which is deflected by a deflector 4 such that the deflected beam 3' moves along a line 8 over the storage phosphor plate 1. The deflector 4 has a reflective surface, in particular in the form of a mirror, which is caused to oscillate by a driving device 5. Alternatively, the deflector 4 may be a polygon mirror which is rotated by the driving device 5, e.g. a motor.

During the movement of the deflected stimulation light beam 3' over the storage phosphor plate 1 the latter emits, as a function of x-ray information stored therein, emission light which is collected by an optical collector 6, for example a light guide and/or a fiber bundle, detected by an optical detector 7, preferably a photomultiplier tube (PMT) and thereby converted into a corresponding detector signal S which is supplied to a processing device 9, in which digital image signal values B for individual pixels of the read-out x-ray image are derived.

Due to conveying the storage phosphor plate 1 in a transport direction T by means of a transport device, individual lines 8 of the storage phosphor plate 1 are successively read out and thus a two-dimensional x-ray image made up of individual pixels with associated image signal values B is obtained. The transport device preferably comprises a roller 10 which is rotated about a rotational axis 11 by means of a respective roller drive (not shown) and conveys the storage phosphor plate 1, preferably due to frictional and/or magnetic forces between the storage phosphor plate 1 and the roller 10.

Figure 2 shows a cross section of an apparatus 12 for reading out storage phosphor plates. The apparatus 12 comprises a housing 13 in which a read-out device, like the one exemplarily shown in Figure 1, is provided.

An input device 20 is provided in a front portion of the housing 13 of the apparatus 12, into which a cassette 40 accommodating a phosphor plate 1 can be inserted by an operator. In the given example, the insertion of the cassette 40 occurs in a substantially horizontal direction. Alternatively, it is also possible to provide the input device 20 at a different location of the housing 13, for example at the top or in a transition region between the top and the front portion of the housing 13. In such cases, the cassette 40 is inserted into the input device 20 along a vertical or inclined direction, respectively.

In the vicinity of the input device 20 inside the hosing 13 a removal device 14 is provided, which is designed for taking the storage phosphor plate 1 out of the cassette 40 and forwarding same along transport direction T to the roller 10 of the read-out device. Further, the removal device 14 is designed for feeding the storage phosphor plate 1 into the cassette 40 after it has been read out.

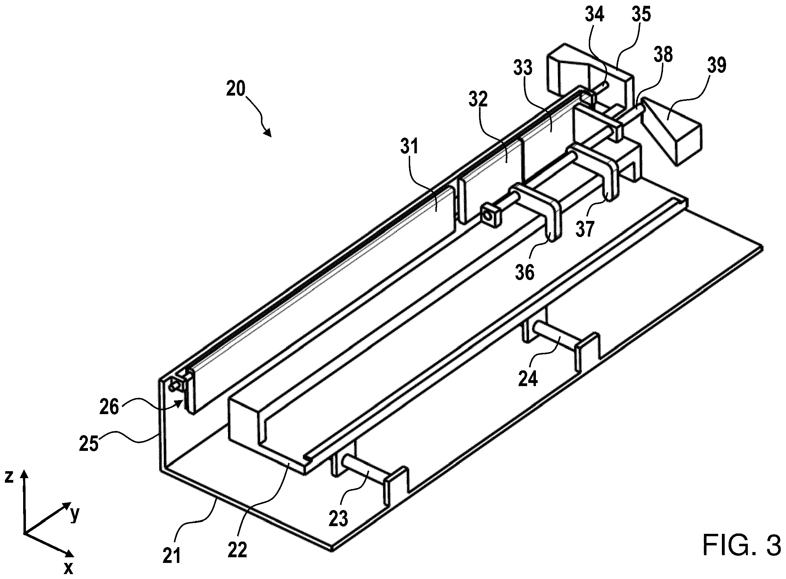

Figure 3 shows a perspective view of an example of an input device 20 comprising a base 21 and a carrier 22 which is movably mounted on the base 21, preferably by means of guide rails 23 and 24, such that the carrier 22 can be moved along the x-direction. Preferably, the carrier 22 is biased, for example by means of coil springs or leaf springs, such that it is automatically reset into an initial position near a front part 25 of the input device 20.

In the front part 25 a slot 26 extending along the y-direction is provided. The slot 26 is arranged and/or formed such that a cassette (not shown) can be inserted through the slot 26 and positioned on the carrier 22 being located behind and near the slot 26.

In the case shown in Figure 3, where no cassette has been inserted into the input device 20, the slot 26 is covered by means of cover elements 31 to 33 which are pivotably mounted on a common mounting element 34, for example a mounting rod. The mounting element 34 interacts with a guiding element 35 which is coupled with the carrier 22 such that moving the carrier 22 in x-direction results in an according movement of the guiding element 35 relative to the mounting element 34. Preferably, the mounting element 34 is biased, e.g. by means of a coil spring, against the guiding element 35.

Moreover, aligning elements 36 and 37 are provided which are pivotably mounted on a common mounting element 38, preferably a mounting rod, which interacts with a guiding element 39. In distinction to the guiding element 35, the guiding element 39 is coupled with the base 21 such that when the carrier 22 is moved relative to the base 21 along the x-direction, the mounting element 38 moves relative to the guiding element 39.

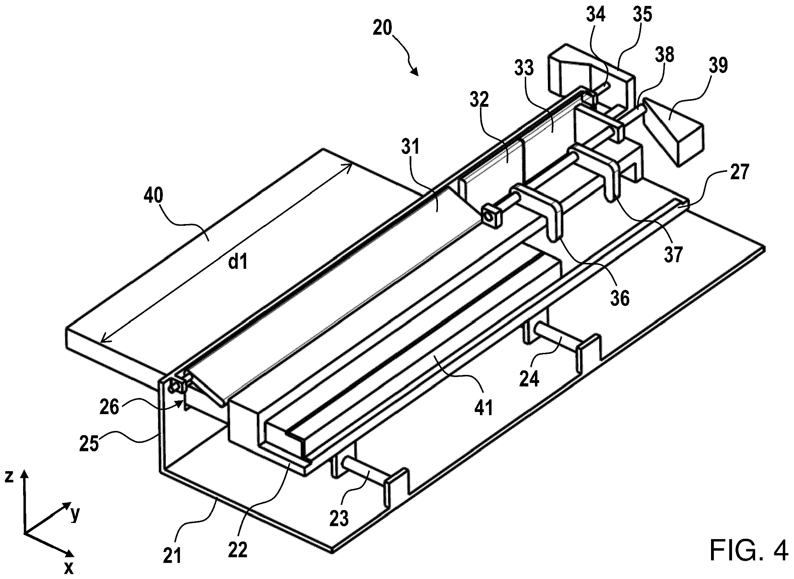

In the following, the functioning of the input device 20 will be explained in more detail with reference to Figures 4 to 7.

Figure 4 shows a perspective view of the input device 20 in a first state together with an inserted cassette 40 of a first format. The cassette 40 has the form of a flat rectangular prism on which an opening is provided at one of the narrow front sides. In order to shut the opening, which preferably extends over the whole width of the respective narrow front side, a hinged cassette lid 41 is provided. The front side, at which the opening and the cassette lid 41 are provided, corresponds to the leading front side with which the cassette 40 is inserted into the input device 20 and is also referred to as "opening side". The cassette 40 has a cassette width d1, preferably extending along the y-direction, and a cassette length, preferably extending along the x-direction. Typical cassette widths the input unit 20 is designed for are 24 cm, 30 cm and 35 cm.

In the shown first state of the input device 20, the cassette 40 has been inserted through slot 26 of front part 25 until the leading face of the cassette 40, on which the cassette lid 41 is provided, reaches carrier stop end 27 provided at the carrier 22. When passing the slot 26, a first cover element 31 is tilted upwards into a position shown in the figure, whereas second and third cover element 32 and 33 remain in a vertical position in which they cover the most part of the remaining slot 26 being adjacent to the cassette 40.

Regarding the remaining components of the input device 20, the above-mentioned remarks with reference to Figure 3 apply accordingly.

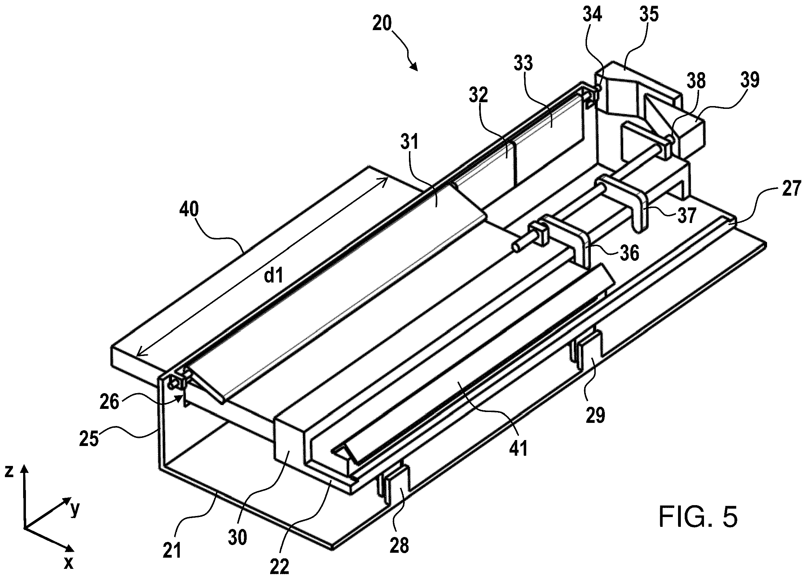

Figure 5 shows a perspective view of the input device 20 in a second state together with the inserted cassette 40 of the first format. In distinction to the first state shown in Figure 4, the cassette 40 has been pushed in x-direction, whereby the carrier 22 moved along with the cassette 40 until base end stops 28 and 29 provided at the base 21 are reached. Because guiding element 35 is, preferably rigidly, coupled with the moving carrier 22, the guiding element 35 moved relative to the mounting rod 34 of cover elements 31 to 33. An elevated section of the guiding element 35 interacts with the mounting rod 34 such that the biased mounting rod 34 is urged along the y-direction so that the second and third cover elements 32 and 33 are moved towards the narrow side of the cassette 40 such that the remaining section of the slot 26, which is not covered by the cassette 40, is light-tightly shut by the cover elements 32 and 33.

Moreover, the biased mounting rod 38, which is preferably rigidly coupled with the carrier 22, has moved together with the movement of the carrier 22 in x-direction and interacted with guiding element 39, which is preferably rigidly coupled with the base 21, whereupon the mounting rod 38 was advanced in parallel to the y-direction. By this means, the first aligning element 36 mounted on the mounting rod 38 was pressed against the side face of cassette 40 such that the cassette 40 is advanced in parallel to the y-direction and/or pressed against a side end stop 30 which is provided on the carrier 22 at the opposite side face of the cassette 40. In this way, an alignment and/or fixing of the cassette 40 are effected. Preferably, in the shown second state the cassette lid 41 is opened by means of appropriate opening elements, like hook-shaped elements as shown in EP 2 573 618 A1.

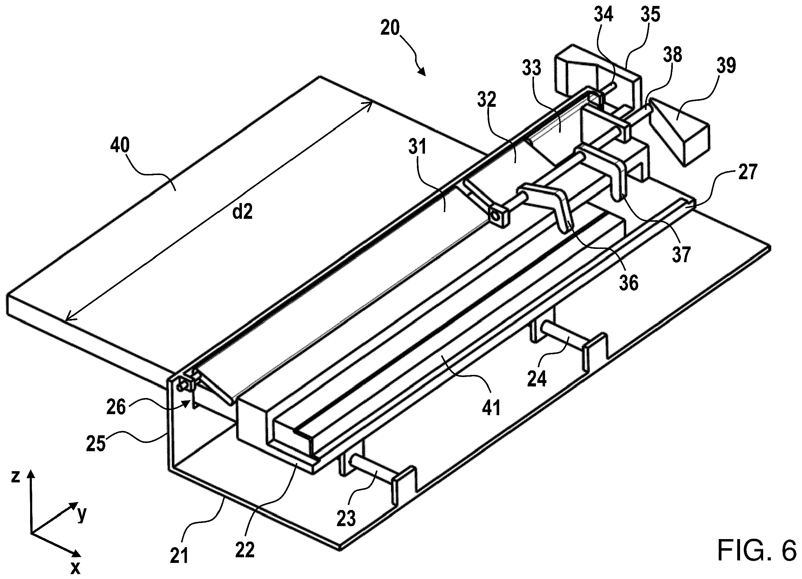

Figure 6 shows a perspective view of the input device 20 in a first state together with an inserted cassette 40 of a second format. In this example, the dimension of the cassette 40 at the side end of the opening corresponds to a width d2 being larger than the width d1 of the cassette 40 shown in Figures 4 and 5.

As a result, by inserting the cassette 40 of the larger format into the input device 20 not only the first cover element 31 but also the second cover element 32 is tilted up, whereas the third cover element 33 remains in its vertical position. Moreover, the first aligning element 36 which is pivotably mounted on mounting rod 38 is tilted up when the leading face of the cassette comes into contact with the lower part of the hook-shaped first aligning element 36 while the cassette 40 is being moved in x-direction until carrier stop end 27 is reached.

Regarding the functioning of the remaining components of the input device 20 shown in Figure 6, the above-mentioned remarks with reference to the example shown in Figure 4 apply accordingly.

Like with the example shown in Figure 5, the cassette 40 of the second format has been, preferably manually, pushed into the input device 20 parallel to x-direction, whereby the carrier 22 is moved along with the movement of the cassette 40 until base end stops 28 and 29 are reached.

During the movement of the carrier 22 in x-direction, the guiding element 35 coupled with the carrier 22 moved relative to the biased mounting rod 34, whereby the latter was pushed parallel to the y-direction, when interacting with the elevated portion of the guiding element 35. As a result, the third cover element provided on the mounting rod 34 is advanced towards the side face of the cassette 40 and is finally pressed against it such that the remaining portion of the slot 26 at the front part 25 is light-tightly shut by the third cover element 33.

Likewise, mounting rod 38 provided at the carrier 22 is moved along with the carrier 22 relative to wedge-shaped guiding element 39, whereby the biased mounting rod 38 together with the second aligning element 37 provided on the mounting rod 38 are advanced parallel to the y-direction towards the side face of the cassette 40. By this means, the hook-shaped second guiding element 37 comes into contact with the side face of the cassette 40 and advances the cassette 40 against the side end stop 30 provided on the carrier 22, whereby the cassette 40 is aligned and/or fixed on the carrier 22.

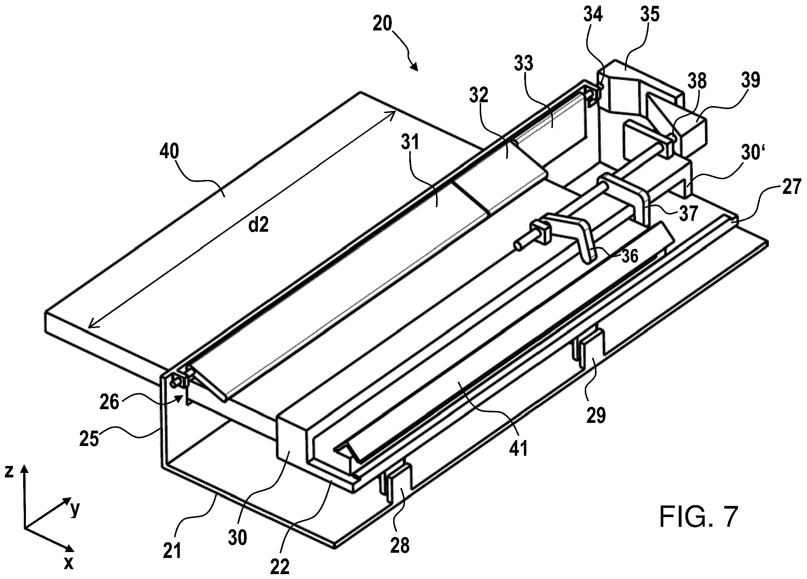

The input device 20 shown in Figures 3 to 7 is also designed for receiving cassettes 40 of a third format having a cassette width d3 being larger than the width d1 and d2 of the cassette 40 shown in Figures 4 and 5 or Figures 6 and 7, respectively. Preferably, the cassette width d3 of the cassette 40 of the third format corresponds to the width of the slot 26 such that the cassette 40, when inserted into the input device 20, covers in essential the whole slot 26. Additional light shutting can be omitted in this case. Accordingly, not only the first and second cover elements 31 and 32 are tilt up, but also the third cover element 33. Preferably, the cassette 40 of the third format may be aligned and/or fixed on the carrier 22 by means of a further side end stop 30' (see Figure 7), which is provided on the carrier 22 opposite to side end stop 30 and can be advanced parallel to the y-direction due to interaction with the wedge-shaped guiding element 39. Accordingly, the further side end stop 30' acts as an aligning element, like the first and second aligning elements 36 and 37.

In summary, by providing cover elements 31 to 33 and/or aligning elements 36, 37 and 30' at different positions along the y-direction and advancing these elements by means of guided mounting elements 34 or 38, respectively, an alignment and/or fixing of cassettes and/or a light-tight shutting of the input slot 26 can be achieved in a simple and reliable manner in cases when cassettes of three different formats are inserted into the input device 20. Moreover, the covering and/or aligning mechanisms described above are designed for being purely mechanically driven and therefore particularly robust and cheap in manufacturing.

Although the functioning of the input device 20 has been elucidated by means of cassettes 40 of three different cassette widths d1, d2 and d3, the approach set forth above can be applied to input devices 20 which are designed for cassettes 40 of more than three different cassette widths.

## Claims

1. An apparatus (12) for reading out x-ray information stored in a storage phosphor plate (1), comprising:
- an input device (20) having a slot (26) through which a cassette (40) can be inserted into the input device (20), the cassette (40) being designed for accommodating a storage phosphor plate (1), and
- a read-out device (2 - 11) for irradiating the storage phosphor plate (1) with stimulation light (3') and detecting emission light stimulated in the phosphor plate (1),
wherein the input device (20) is designed for receiving cassettes (40) having different cassette widths (d1, d2), wherein the input device (20) comprises one or more first elements (30, 36 - 39) designed for aligning and/or fixing cassettes (40) having different cassette widths (d1, d2) in the input device (20), the first elements comprising at least one aligning element (36, 37) for each of the at least two different cassette widths (d1, d2), wherein each of the at least one aligning elements (36, 37) is designed for aligning and/or fixing a cassette (40) of a given cassette width (d1, d2) in the input device (20), the first elements further comprising at least one end stop (30) and each of the at least one aligning elements (36, 37) being positioned such that
- when a cassette (40) of a first cassette width (d1) is inserted, the cassette is pressed against the end stop (30) by means of a first aligning element (36) having a first position, and
- when a cassette (40) of a second cassette width (d2) is inserted, the cassette (40) is pressed against the end stop (30) by means of a second aligning element (37) having a second position, which is different from the first position,
the first and second aligning elements (36, 37) being mounted on a first mounting element (38),
the apparatus further comprising a first guiding element (39) arranged and/or formed for interacting with the first mounting element (38) such that the first mounting element (38) can be shifted parallel to a first direction (y), and further comprising a carrier (22) designed for being displaced in a second direction (x), which is perpendicular to the first direction (y), by means of a cassette (40) being inserted, in particular pushed, into the input device (20), wherein the first mounting element (38) is provided on the carrier (22) such that when the carrier (22) is displaced in the second direction (x) the first mounting element (38) interacts with the first guiding element (39) so that the first mounting element (38) is shifted parallel to the first direction (y).

2. The apparatus according to claim 1, wherein the first and second aligning elements (36, 37) are provided at different positions along the first direction (y) parallel to the slot (26) of the input device (20) and/or to an opening of a cassette (40) inserted into the slot (26).

3. The apparatus according to claim 1 or 2, the first and/or second aligning elements (36, 37) being pivotably mounted on the first mounting element (38).

4. An apparatus (12) for reading out x-ray information stored in a storage phosphor plate (1), comprising:
- an input device (20) having a slot (26) through which a cassette (40) can be inserted into the input device (20), the cassette (40) being designed for accommodating a storage phosphor plate (1), and
- a read-out device (2 - 11) for irradiating the storage phosphor plate (1) with stimulation light (3') and detecting emission light stimulated in the phosphor plate (1),
wherein the input device (20) is designed for receiving cassettes (40) having different cassette widths (d1, d2), wherein the input device (20) comprises one or more second elements (31 - 35) designed for shutting the slot (26) of the input device (20) in order to prevent ambient light from passing through the slot (26) when one of the cassettes (40) is inserted into the input device (20), wherein the second elements comprise at least one cover element (31 - 33) for each of the at least two different cassette widths (d1, d2), wherein each of the at least one cover element (31 - 33) is designed for shutting the slot (26) of the input device (20) when a cassette (40) of a given cassette width (d1, d2) is inserted in the input device (20), each of the at least one cover elements (31 - 33) being positioned such that
- when a cassette (40) of a first cassette width (d1) is inserted, the slot (26) is shut by means of a first cover element (32) having a first position and a second cover element (33) having a second position, which is different from the first position, and
- when a cassette (40) of a second cassette width (d2) is inserted, the slot (26) is shut by means of the second cover element (33),
the first and second cover elements (32, 33) being mounted on a second mounting element (34),
the apparatus further comprising a second guiding element (35) arranged and/or formed for interacting with the second mounting element (34) such that the second mounting element (34) can be shifted parallel to a first direction (y), whereby the first and/or second cover element (32, 33) is or are, respectively, pressed against the inserted cassette (40), and further comprising a carrier (22) designed for being displaced in a second direction (x), which is perpendicular to the first direction (y), by means of a cassette (40) being inserted, in particular pushed, into the input device (20), wherein the second mounting element (34) is provided on the carrier (22) such that when the carrier (22) is displaced in the second direction (x) the second mounting element (34) is interacting with the second guiding element (35) so that the second mounting element (34) is shifted parallel to the first direction (y), whereby the first and/or second cover element (32, 33) is or are, respectively, shifted towards and/or pressed against the inserted cassette (40) .

5. The apparatus according to claim 4, wherein the first and second cover elements (32, 33) are provided at different positions along the first direction (y) parallel to the slot of the input device (20) and/or to an opening of a cassette (40) inserted into the slot (26).

6. The apparatus according to claim 4 or 5, the first and/or second cover elements (32, 33) being pivotably mounted on the second mounting element (34).

## Patentansprüche

1. Ein Apparat (12) zum Auslesen von in einer
Speicherleuchtstoffplatte (1) gespeicherten Röntgeninformationen, umfassend:
- eine Eingabevorrichtung (20) mit einem Schlitz (26), durch den eine Kassette (40) in die Eingabevorrichtung (20) eingeführt werden kann, wobei die Kassette (40) zum Aufnehmen einer Speicherleuchtstoffplatte (1) ausgestaltet ist, und
- eine Auslesevorrichtung (2 - 11) zum Bestrahlen der Speicherleuchtstoffplatte (1) mit Stimulationslicht (3') und zum Detektieren von in der Leuchtstoffplatte (1) angeregtem Emissionslicht,
wobei die Eingabevorrichtung (20) zum Aufnehmen von Kassetten (40) mit unterschiedlichen Kassettenbreiten (d1, d2) ausgestaltet ist, wobei die Eingabevorrichtung (20) ein oder mehrere erste Elemente (30, 36 - 39) umfasst, das (die) zum Ausrichten und/oder Fixieren von Kassetten (40) mit unterschiedlichen Kassettenbreiten (d1, d2) in der Eingabevorrichtung (20) ausgestaltet ist (sind), wobei die ersten Elemente mindestens ein Ausrichtungselement (36, 37) für jede der mindestens zwei unterschiedlichen Kassettenbreiten (d1, d2) umfassen, wobei jedes der mindestens einen Ausrichtungselemente (36, 37) zum Ausrichten und/oder Fixieren einer Kassette (40) einer vorgegebenen Kassettenbreite (d1, d2) in der Eingabevorrichtung (20) ausgestaltet ist, wobei die ersten Elemente ferner mindestens einen Endanschlag (30) umfassen und jedes der mindestens einen Ausrichtungselemente (36, 37) derart positioniert ist, dass
- wenn eine Kassette (40) einer ersten Kassettenbreite (d1) eingeführt wird, die Kassette mittels eines ersten Ausrichtungselements (36) mit einer ersten Position gegen den Endanschlag (30) gedrückt wird, und
- wenn eine Kassette (40) einer zweiten Kassettenbreite (d2) eingeführt wird, die Kassette mittels eines zweiten Ausrichtungselements (37) mit einer zweiten, zur ersten Position unterschiedlichen Position gegen den Endanschlag (30) gedrückt wird,
wobei das erste Ausrichtungselement (36) und das zweite Ausrichtungselement (37) auf einem ersten Montageelement (38) montiert sind,
wobei der Apparat ferner ein erstes Führungselement (39) umfasst, das angeordnet und/oder ausgebildet ist, um derart mit dem ersten Montageelement (38) zusammenzuwirken, dass das erste Montageelement (38) parallel zu einer ersten Richtung (y) verschoben werden kann, und ferner einen Träger (22) umfasst, der so ausgestaltet ist, dass er in eine zweite, senkrecht zur ersten Richtung (y) verlaufende Richtung (x) verschoben wird, indem eine Kassette (40) in die Eingabevorrichtung (20) eingeführt, insbesondere hinein gedrückt, wird, wobei das erste Montageelement (38) derart auf dem Träger (22) angeordnet ist, dass, wenn der Träger (22) in die zweite Richtung (x) verschoben wird, das erste Montageelement (38) derart mit dem ersten Führungselement (39) zusammenwirkt, dass das erste Montageelement (38) parallel zur ersten Richtung (y) verschoben wird.

2. Der Apparat nach Anspruch 1, wobei das erste Ausrichtungselement (36) und das zweite Ausrichtungselement (37) an unterschiedlichen Positionen entlang der parallel zum Schlitz (26) der Eingabevorrichtung (20) und/oder zu einer Öffnung einer in den Schlitz (26) eingeführten Kassette (40) verlaufenden ersten Richtung (y) angeordnet sind.

3. Der Apparat nach Anspruch 1 oder 2, wobei das erste Ausrichtungselement (36) und/oder das zweite Ausrichtungselement (37) drehbar auf dem ersten Montageelement (38) angeordnet ist (sind).

4. Ein Apparat (12) zum Auslesen von in einer Speicherleuchtstoffplatte (1) gespeicherten Röntgeninformationen, umfassend:
- eine Eingabevorrichtung (20) mit einem Schlitz (26), durch den eine Kassette (40) in die Eingabevorrichtung (20) eingeführt werden kann, wobei die Kassette (40) zum Aufnehmen einer Speicherleuchtstoffplatte (1) ausgestaltet ist, und
- eine Auslesevorrichtung (2 - 11) zum Bestrahlen der Speicherleuchtstoffplatte (1) mit Stimulationslicht (3') und zum Detektieren von in der Leuchtstoffplatte (1) angeregtem Emissionslicht,
wobei die Eingabevorrichtung (20) zum Aufnehmen von Kassetten (40) mit unterschiedlichen Kassettenbreiten (d1, d2) ausgestaltet ist, wobei die Eingabevorrichtung (20) ein oder mehrere zweite Elemente (31 - 35) umfasst, das (die) so ausgestaltet ist (sind), dass es (sie) den Schlitz (26) der Eingabevorrichtung (20) schließt (schließen), damit verhütet wird, dass Umgebungslicht durch den Schlitz (26) hindurch dringt, wenn eine der Kassetten (40) in die Eingabevorrichtung (20) eingeführt wird, wobei die zweiten Elemente mindestens ein Abdeckelement (31 - 33) für jede der mindestens zwei unterschiedlichen Kassettenbreiten (d1, d2) umfassen, wobei jedes der mindestens einen Abdeckelemente (31 - 33) so ausgestaltet ist, dass es den Schlitz (26) der Eingabevorrichtung (20) schließt, wenn eine Kassette (40) einer vorgegebenen Kassettenbreite (d1, d2) in die Eingabevorrichtung (20) eingeführt wird, wobei jedes der mindestens einen Abdeckelemente (31 - 33) so positioniert ist, dass
- wenn eine Kassette (40) einer ersten Kassettenbreite (d1) eingeführt wird, der Schlitz (26) mittels eines ersten Abdeckelements (32) mit einer ersten Position und eines zweiten Abdeckelements (33) mit einer zweiten, zur ersten Position unterschiedlichen Position geschlossen wird, und
- wenn eine Kassette (40) einer zweiten Kassettenbreite (d2) eingeführt wird, der Schlitz (26) mittels des zweiten Abdeckelements (33) geschlossen wird,
wobei das erste Abdeckelement (32) und das zweite Abdeckelement (33) auf einem zweiten Montageelement (34) montiert sind,
wobei der Apparat ferner ein zweites Führungselement (35) umfasst, das angeordnet und/oder ausgebildet ist, um derart mit dem zweiten Montageelement (34) zusammenzuwirken, dass das zweite Montageelement (34) parallel zu einer ersten Richtung (y) verschoben werden kann, wobei das erste Abdeckelement (32) und/oder das zweite Abdeckelement (33) gegen die eingeführte Kassette (40) gedrückt wird (werden), und ferner einen Träger (22) umfasst, der so ausgestaltet ist, dass er in eine zweite, senkrecht zur ersten Richtung (y) verlaufende Richtung (x) verschoben wird, indem eine Kassette (40) in die Eingabevorrichtung (20) eingeführt, insbesondere hinein gedrückt, wird, wobei das zweite Montageelement (34) derart auf dem Träger (22) angeordnet ist, dass, wenn der Träger (22) in die zweite Richtung (x) verschoben wird, das zweite Montageelement (34) derart mit dem zweiten Führungselement (35) zusammenwirkt, dass das zweite Montageelement (34) parallel zur ersten Richtung (y) verschoben wird, wobei das erste Abdeckelement (32) und/oder das zweite Abdeckelement (33) in Richtung der eingeführten Kassette (40) verschoben und/oder gegen letztere gedrückt wird (werden).

5. Der Apparat nach Anspruch 4, wobei das erste Abdeckelement (32) und das zweite Abdeckelement (33) an unterschiedlichen Positionen entlang der parallel zum Schlitz der Eingabevorrichtung (20) und/oder zu einer Öffnung einer in den Schlitz (26) eingeführten Kassette (40) verlaufenden ersten Richtung (y) angeordnet sind.

6. Der Apparat nach Anspruch 4 oder 5, wobei das erste Abdeckelement (32) und/oder das zweite Abdeckelement (33) drehbar auf dem zweiten Montageelement (34) angeordnet ist (sind).

## Revendications

1. Appareil (12) destiné à la lecture d'informations radiographiques stockées dans une plaque luminescente à mémoire (1), comprenant:
- un dispositif d'alimentation (20) comprenant une fente (26) à travers laquelle une cassette (40) peut être insérée dans le dispositif d'alimentation (20), ladite cassette (40) étant conçue de façon à recevoir une plaque luminescente à mémoire (1), et
- un dispositif de lecture (2 - 11) destiné à irradier la plaque luminescente à mémoire (1) à l'aide de lumière de stimulation (3') et à détecter de la lumière d'émission stimulée dans la plaque luminescente à mémoire (1),
ledit dispositif d'alimentation (20) étant conçu de façon à recevoir des cassettes (40) à différentes largeurs de cassette (d1, d2), ledit dispositif d'alimentation (20) comprenant un ou plusieurs premiers éléments (30, 36 - 39) conçu(s) de façon à aligner et/ou fixer des cassettes (40) à différentes largeurs de cassette (d1, d2) dans le dispositif d'alimentation (20), lesdits premiers éléments comprenant au moins un élément d'alignement (36, 37) pour chacune desdites au moins deux différentes largeurs de cassette (d1, d2), chacun desdits au moins un éléments d'alignement (36, 37) étant conçu de façon à aligner et/ou fixer une cassette (40) d'une largeur de cassette prédéterminée (d1, d2) dans le dispositif d'alimentation (20), lesdits premiers éléments comprenant en outre au moins une butée d'extrémité (30) et chacun desdits au moins un éléments d'alignement (36, 37) étant positionné de façon à ce que
- lorsqu'une cassette (40) d'une première largeur de cassette (d1) est insérée, la cassette soit poussée contre la butée d'extrémité (30) à l'aide d'un premier élément d'alignement (36) ayant une première position, et
- lorsqu'une cassette (40) d'une deuxième largeur de cassette (d2) est insérée, la cassette soit poussée contre la butée d'extrémité (30) à l'aide d'un deuxième élément d'alignement (37) ayant une deuxième position qui diffère de la première position, lesdits premier et deuxième éléments d'alignement (36, 37) étant montés sur un premier élément de montage (38),
ledit appareil comprenant en outre un premier élément de guidage (39) étant disposé et/ou formé de façon à coopérer avec ledit premier élément de montage (38) de façon à ce que le premier élément de montage (38) puisse être déplacé parallèlement à un premier sens (y), et comprenant en outre un support (22) conçu de façon à être déplacé dans un deuxième sens (x) qui s'étend perpendiculairement au premier sens (y) lorsqu'une cassette (40) est insérée, en particulier poussée, dans le dispositif d'alimentation (20), ledit premier élément de montage (38) étant disposé sur le support (22) de façon à ce que, lorsque le support (22) est déplacé dans le deuxième sens (x), le premier élément de montage (38) coopère avec le premier élément de guidage (39) de façon à ce que le premier élément de montage (38) soit déplacé parallèlement au premier sens (y).

2. Appareil selon la revendication 1, **caractérisé en ce que** lesdits premier et deuxième éléments d'alignement (36, 37) sont disposés à différentes positions le long du premier sens (y) qui s'étend parallèlement à la fente (26) du dispositif d'alimentation (20) et/ou à une ouverture dans une cassette (40) insérée dans la fente (26).

3. Appareil selon la revendication 1 ou 2, **caractérisé en ce que** lesdits premier et/ou deuxième éléments d'alignement (36, 37) est (sont) monté(s) de façon rotative sur le premier élément de montage (38).

4. Appareil (12) destiné à la lecture d'informations radiographiques stockées dans une plaque luminescente à mémoire (1), comprenant:
- un dispositif d'alimentation (20) comprenant une fente (26) à travers laquelle une cassette (40) peut être insérée dans le dispositif d'alimentation (20), ladite cassette (40) étant conçue de façon à recevoir une plaque luminescente à mémoire (1), et
- un dispositif de lecture (2 - 11) destiné à irradier la plaque luminescente à mémoire (1) à l'aide de lumière de stimulation (3') et à détecter de la lumière d'émission stimulée dans la plaque luminescente à mémoire (1),
ledit dispositif d'alimentation (20) étant conçu de façon à recevoir des cassettes (40) à différentes largeurs de cassette (d1, d2), ledit dispositif d'alimentation (20) comprenant un ou plusieurs deuxièmes éléments (31 - 35) conçu(s) de façon à fermer la fente (26) du dispositif d'alimentation (20) afin de prévenir que de la lumière ambiante ne passe à travers la fente (26) lorsque l'une des cassettes (40) est insérée dans le dispositif d'alimentation (20), lesdits deuxièmes éléments comprenant au moins un élément de recouvrement (31 - 33) pour chacune desdites au moins deux différentes largeurs de cassette (d1, d2), chacun desdits au moins un éléments de recouvrement (31 - 33) étant conçu de façon à fermer la fente (26) du dispositif d'alimentation (20) lorsqu'une cassette (40) d'une largeur de cassette prédéterminée (d1, d2) est insérée dans le dispositif d'alimentation (20), chacun desdits au moins un éléments de recouvrement (31 - 33) étant positionné de façon à ce que
- lorsqu'une cassette (40) d'une première largeur de cassette (d1) est insérée, la fente (26) soit fermée à l'aide d'un premier élément de recouvrement (32) ayant une première position et d'un deuxième élément de recouvrement (33) ayant une deuxième position qui diffère de la première position, et
- lorsqu'une cassette (40) d'une deuxième largeur de cassette (d2) est insérée, la fente (26) soit fermée à l'aide du deuxième élément de recouvrement (33),
lesdits premier et deuxième éléments de recouvrement (32, 33) étant montés sur un deuxième élément de montage (34),
l'appareil comprenant en outre un deuxième élément de guidage (35) disposé et/ou formé de façon à coopérer avec le deuxième élément de montage (34) de façon à ce que le deuxième élément de montage (34) puisse être déplacé parallèlement à un premier sens (y), lesdits premier et/ou deuxième éléments de recouvrement (32, 33) étant poussé(s) contre la cassette insérée (40), et comprenant en outre un support (22) conçu de façon à être déplacé dans un deuxième sens (x) s'étendant perpendiculairement au premier sens (y) lorsqu'une cassette (40) est insérée, en particulier poussée, dans le dispositif d'alimentation (20), ledit deuxième élément de montage (34) étant disposé sur le support (22) de façon à ce que, lorsque le support (22) est déplacé dans le deuxième sens (x), ledit deuxième élément de montage (34) coopère avec le deuxième élément de guidage (35) de façon à ce que le deuxième élément de montage (34) soit déplacé parallèlement au premier sens (y), lesdits premier et/ou deuxième éléments de recouvrement (32, 33) étant déplacé(s) dans le sens de la cassette insérée (40) et/ou poussé(s) contre cette dernière.

5. Appareil selon la revendication 4, **caractérisé en ce que** lesdits premier et deuxième éléments de recouvrement (32, 33) sont disposés à différentes positions le long du premier sens (y) qui s'étend parallèlement à la fente (26) du dispositif d'alimentation (20) et/ou à une ouverture dans une cassette (40) insérée dans la fente (26).

6. Appareil selon la revendication 4 ou 5, **caractérisé en ce que** lesdits premier et/ou deuxième éléments de recouvrement (32, 33) est (sont) monté(s) de façon rotative sur le deuxième élément de montage (34).
